# FASCICULE DE BREVET EUROPEEN

(11) **EP 2 001 669 B1**
(45) Date de publication et mention de la délivrance du brevet: **24.02.2010**
(21) Numéro de dépôt: 07731745.1
(22) Date de dépôt: 15.03.2007
(51) Int. Cl.: B32B 17/10, B60J 1/08

(54) **VEHICULE COMPORTANT UNE VITRE REVETUE D'UN FILM DE SECURITE ET PROCEDE DE FABRICATION**
MIT EINEM SICHERHEITSFILM AUSGEKLEIDETES FAHRZEUGFENSTER UND HERSTELLUNGSVERFAHREN
VEHICLE COMPRISING A WINDOW LINED WITH A SAFETY FILM, AND PRODUCTION METHOD

(30) Priorité: 03.04.2006 FR 0651169
(43) Date de publication de la demande: 17.12.2008
(73) Titulaire: Renault SAS, 92100 Boulogne Billancourt (FR)
(72) Inventeur: PERRIN, Vincent, F-91530 Sermaise (FR); ROUFFIGNAC, Eric, F-28130 Saint-martin-de-nigelles (FR)
(74) Mandataire: Guyon, Rodolphe C.
(86) Numéro de dépôt international: PCT/FR2007/050929
(87) Numéro de publication internationale: WO 2007/113413

(56) Documents cités:
- WO-A1-2004/073976
- FR-A- 2 814 706

## Description

La présente invention se rapporte à un véhicule comportant une vitre revêtue d'un film de sécurité. Elle concerne en particulier un véhicule dans lequel le film est adhérant sur une face intérieure de la vitre.

Le document FR2814706 décrit un véhicule dans lequel la vitre obture une ouverture du toit. Le film est un film de sécurité qui a une fonction anti-intrusion ou anti-rupture.

Un problème est, par exemple dans le cas d'une vitre qui est une lunette arrière du véhicule, d'assurer la fixation de la lunette sur la carrosserie, tout comme la fixation de la périphérie du film, sans que la fixation du film ne détériore la qualité de la fixation de la lunette sur la carrosserie.

Le document W02004073976 propose de noyer toute la périphérie d'un film dans une bande adhésive, au détriment de la facilité de fixation de la vitre sur un élément de carrosserie et au détriment de la facilité de fixation de la périphérie du film. De plus, le document W02004073976 montre l'utilisation d'un élément de retenue, au détriment du coût.

L'invention vise à améliorer les solutions connues.

L'invention a pour objet un véhicule comportant une vitre fixée sur une paroi de carrosserie, la vitre étant revêtue d'un film de sécurité adhérant sur une face intérieure de la vitre. Une bordure à la périphérie de la vitre est libre de film de manière qu'une limite périphérique du film soit située à distance du bord de la vitre. La distance séparant le bord de la vitre et la limite du film est alternativement variable de manière que des premières portions périphériques du film soient en contact avec une bande d'adhésif fixant la vitre sur une paroi de carrosserie de véhicule et des secondes portions périphériques du film soient libres par rapport à la bande d'adhésif.

Selon d'autres caractéristiques avantageuses de l'invention qui peuvent être prises séparément ou en combinaison :
- les premières et secondes portions périphériques du film sont alternativement adjacentes,
- la limite périphérique du film est une ligne lisse,
- la limite du film est ondulée,
- la limite du film est ondulée selon des vagues dont des sommets correspondent aux portions de la limite les plus rapprochées du bord de la vitre, dans les premières portions, et dont des creux correspondent aux portions de la limite les plus éloignées du bord de la vitre, dans les deuxièmes portions, le profil de chaque sommet étant plus aplati que le profil de chaque creux,
- la distance séparant la limite du film et le bord de la vitre est alternativement variable selon une sinusoïde,
- la limite du film est selon un profil en dents de scie,
- la limite du film est selon un profil crénelé,
- la plus grande largeur de recouvrement du film par la bande d'adhésif dans les premières portions peut être sensiblement de 1 millimètre,

L'invention concerne aussi un procédé de fabrication d'un véhicule selon l'invention.

Le procédé comporte au moins une étape de découpe de film et une étape de mise en adhérence du film sur la vitre préalablement au montage de la vitre sur le véhicule. Le précédé comporte, dans une première phase de montage de la vitre sur le véhicule, une étape dans laquelle la bande d'adhésif est encollée sur la vitre. Le procédé comporte, dans une deuxième phase de montage de la vitre sur le véhicule, une étape dans laquelle la vitre est plaquée contre la paroi, les premières portions périphériques du film étant en contact avec la bande d'adhésif et les deuxièmes portions périphériques étant libres par rapport à la bande d'adhésif.

Dans un mode de réalisation du procédé, pendant l'étape dans laquelle la bande d'adhésif est encollée sur la vitre, la bande d'adhésif est encollée sur les premières portions périphériques du film.

D'autres caractéristiques et avantages de l'invention apparaîtront clairement à la lecture de la description suivante du mode de réalisation non limitatif de celle-ci, en liaison avec les dessins annexés sur lesquels :

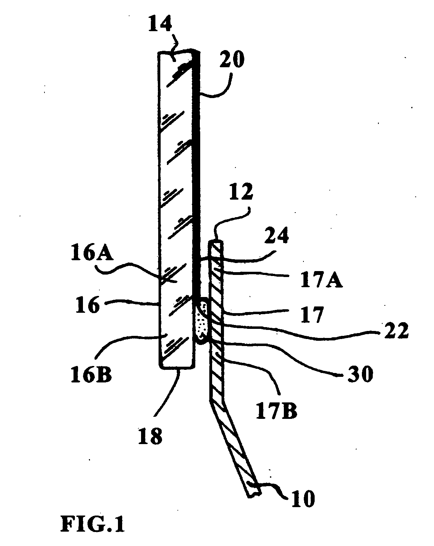

- la figure 1 est une vue schématique en section partielle d'un véhicule comportant un véhicule selon l'invention,
- la figure 2 est une vue partielle en plan d'une vitre de véhicule selon l'invention,
- la figure 3 est une vue de détail de la figue 2 comme indiqué par le repère III de la figure 2,
- la figure 4 est une vue de détail de la figue 3 comme indiqué par le repère IV de la figure 3,

Traditionnellement, un véhicule automobile est équipé de vitres collées sur la carrosserie. Il s'agit par exemple d'une lunette arrière ou d'une vitre latérale de custode.

Dans certains cas, des véhicules sont susceptibles de subir des actes de vandalisme tels que des jets de pierre. De tels véhicules sont équipés d'un film de sécurité ajouté sur la face interne, côté habitacle, des vitres classiques. Le film doit, sans constituer un blindage, ralentir l'entrée frauduleuse et éviter le déboîtement de la vitre par rapport à la carrosserie. S'il y a des occupants dans le véhicule, leur sécurité est améliorée en particulier en évitant l'entrée de la pierre dans l'habitacle ou en évitant la projection de morceaux de verre dans l'habitacle sous l'effet du choc de la pierre.

Classiquement, un tel film est un film de polyéthylène téréphtalate d'épaisseur environ 200 à 350 micro mètres. Le film adhère sur la vitre par l'intermédiaire d'un matériau adhésif.

Dans le mode de réalisation de l'invention décrit ci-dessous, la vitre collée est une lunette arrière de véhicule, par exemple montée sur un hayon permettant l'accès au coffre.

Le hayon comporte une paroi 10 de carrosserie qui délimite une ouverture 12 pour la vision arrière.

La vitre 14 ferme intégralement l'ouverture. Une portion périphérique 16 de la vitre 14 recouvre la paroi 10 sur tout le pourtour de l'ouverture 12. Ladite portion 16 de la vitre entoure ladite ouverture de façon à être en face d'une zone 17 de la paroi s'étendant à la périphérie de l'ouverture.

Dans l'exemple représenté, le film 20 appliqué sur la vitre est également présent sur toute la surface intérieure de la vitre en regard de l'ouverture, mais aussi autour de cette surface, afin de limiter une détérioration de la vitre à proximité de ses bords.

Dans l'exemple représenté, une limite périphérique 22 du film est située entre l'ouverture 12 et le bord périphérique 18 de la vitre de façon à ce qu'une ceinture périphérique 24 du film s'étende entre ladite portion périphérique et ladite zone 17. La ceinture 24 est située en regard de la zone 17, sur une fraction interne 17A de la zone 17 adjacente à l'ouverture. La ceinture 24 s'étend sur une aire de la vitre couvrant une fraction interne 16A de la portion périphérique 16 adjacente à la surface de la vitre en regard de l'ouverture. Les fractions internes 16A et 17A s'étendent entre le niveau de la limite 22 et le niveau de l'ouverture 12.

Une fraction externe 16B de la portion périphérique 16 est adjacente au bord périphérique 18 de la vitre. La fraction externe 16B, forme une bordure libre de film, c'est-à-dire une bordure 16B de la vitre non recouverte par le film. A l'exception de la bordure 16B située entre le bord périphérique de la vitre et la limite périphérique du film, la vitre est recouverte par le film sur toute sa surface interne.

La fraction externe 16B, ou bordure 16B, et la fraction externe 17B s'étendent donc entre le niveau du bord 18 et le niveau de la limite 22.

Une bande d'adhésif 30, appelée aussi joint de colle ou bandeau de colle, est située entre la paroi 10 et la vitre 16 pour la fixation de la vitre sur la carrosserie.

La bande d'adhésif 30 comporte un bord interne 30A côté film et côté habitacle du véhicule. La bande d'adhésif 30 comporte un bord externe 30B côté bord périphérique 18 de la vitre. La bande d'adhésif 30 comporte un axe moyen 30C. La matière de la bande d'adhésif 30 est celle habituellement utilisée pour le collage d'un vitrage sur une carrosserie de véhicule automobile.

La bande d'adhésif 30 est aussi utilisée pour le collage du film 20, afin de préserver la cohésion de l'ensemble formé par la vitre et le film.

Selon l'invention, la limite périphérique 22 du film n'est pas rectiligne ou sensiblement rectiligne.

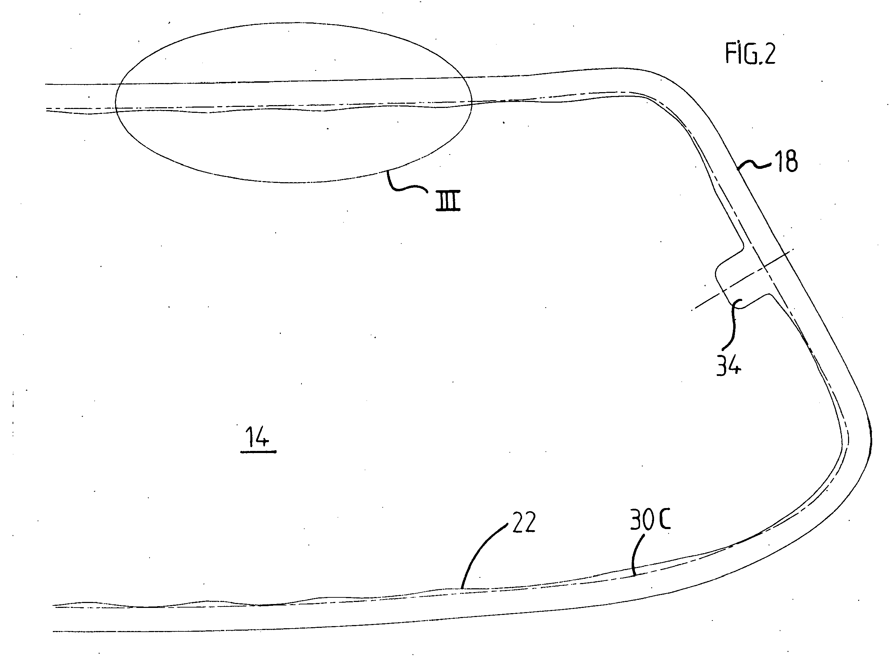

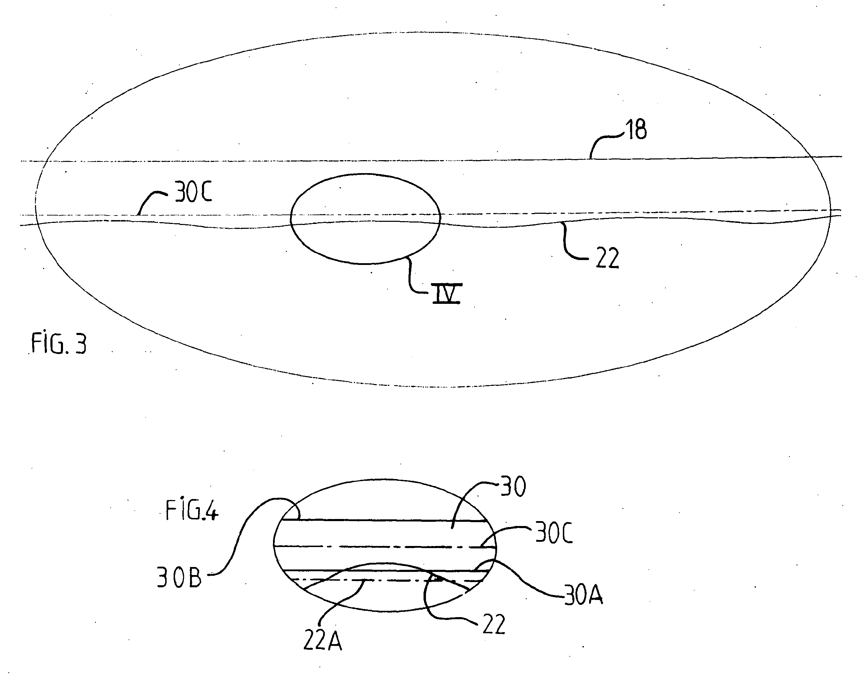

Dans l'exemple de réalisation représenté, la limite 22 est ondulée de façon à former une ligne lisse en comporte une ligne moyenne 22A (figure 4) sensiblement parallèle au bord de la vitre sur la majorité du pourtour de la vitre, excepté par exemple au niveau de pattes de raccordement de dégivrage de linette tel que représenté sur la partie 34 (figure 2). L'amplitude des ondulations est ici environ de 5 millimètres.

Dans un mode de réalisation non représenté, la limite 22 est découpée sensiblement selon une sinusoïde d'amplitude égale à 4 millimètres. L'amplitude de la sinusoïde est fonction de la largeur de l'émaillage périphérique du vitrage, l'émaillage étant habituellement destiné à rendre l'adhésif non visible de l'extérieur.

Dans le mode de réalisation représenté, la limite 22 est découpée selon un profil qui forme des vagues. Le sommet de chaque vague, qui correspond aux portions de la limite 22 les plus proches du bord de la vitre, a un profil plus aplati que le profil du creux de chaque vague, qui correspond aux portions de la limite 22 les plus éloignées du bord de la vitre.

Selon l'invention, la bande d'adhésif 30 recouvre le sommet vague et ne recouvre pas le creux des vagues. Chaque creux est donc libre de collage par rapport à la bande 30. Dans le mode de réalisation représenté, la bande d'adhésif 30 recouvre le sommet des vagues, sur sensiblement 1 millimètre. Ici, la bande d'adhésif 30 recouvre le sommet des vagues sensiblement sur un quart de l'amplitude des vagues et sur moins d'un quart de la largeur de la bande d'adhésif.

Les zones du film non recouvertes par la bande permettent d'éviter qu'il n'y ait une zone d'amorce de décollage de la bande 30 par rapport à la vitre, au bénéfice de la qualité de la fixation de la vitre 14 sur la carrosserie 10.

Ainsi, avantageusement, si le matériau adhésif ne suffit pas à la cohésion du film et de la vitre lors d'un impact sur la vitre, la bande d'adhésif 30 permet d'éviter le découpage de la vitre en renforçant l'effet du film au niveau de sa limite périphérique, sans pénaliser l'effet de la bande d'adhésif pour la fixation de la vitre sur la carrosserie.

La vitre étant fournie équipée de son film avant montage sur le véhicule. Au moins une étape de découpe de film, par exemple à partir d'un rouleau de film, et une étape de mise en adhérence du film sur la vitre sont donc préalables au montage de la vitre sur le véhicule.

Dans une première phase de montage de la vitre sur le véhicule, la bande d'adhésif 30 est encollée de façon décalée par rapport à la ligne moyenne 22A de la limite périphérique 22 de puis la vitre est assemblée sur la carrosserie.

Il est a remarquer que l'axe moyen 30C de la bande d'adhésif 30 est décalé vers l'extérieur, c'est-à-dire vers le bord périphérique 18 de le vitre 14, tant par rapport à la ligne moyenne 22A que par rapport aux sommets des vagues.

La bande 30 est appliquée, typiquement par un bras de robot, tant sur la fraction externe 16B de la portion périphérique 16 de la vitre 14 que sur le film 20, sur les premières portions périphériques du film.

Dans une deuxième phase de montage, la vitre est ensuite placée en regard de l'ouverture 12 et de la zone 17 de la paroi 10 puis la bande 30 est plaquée contre la fraction externe 17B pour la fixation de la vitre 14 sur la paroi 10.

La bande 30, pressée entre la vitre et la carrosserie, typiquement par un robot, adhère sur portion de la limite périphérique du film.

Typiquement, la bande d'adhésif 30 a une largeur d'environ 6 à 10 millimètres.

Dans le mode de réalisation représenté, la découpe non rectiligne de la limite du film est continue, c'est-à-dire sans angle vif, mais en variante, la limite du film est selon un profil en dents de scie, c'est-à-dire avec des découpes triangulaires qui forment des sommets et des creux. En variante, la limite du film est selon un profil crénelé formant des sommets et des creux.

Dans une variante de réalisation, tous les sommets ne coopèrent pas avec de l'adhésif, si bien que les deuxièmes portions comportent un train de sommets et de creux.

Avantageusement, en procédant comme ci-dessus, l'invention autorise l'encollage de la bande sur un vitrage avec film directement au sein d'une chaîne principale de fabrication du véhicule. Ainsi, il est possible de disposer d'un film de sécurité dans un véhicule sans modification de la chaîne de montage installée en usine pour la fixation de la vitre sur la carrosserie, et sans modification de la méthode de fixation de la vitre en usine.

## Revendications

1. Véhicule comportant une vitre (14) fixée sur une paroi (10) de carrosserie, la vitre (14) étant revêtue d'un film (20) de sécurité adhérant sur une face intérieure de la vitre, **caractérisé en ce qu'**une bordure (16B) à la périphérie de la vitre (14) est libre de film (20) de manière qu'une limite périphérique (22) du film soit située à distance du bord (18) de la vitre, la distance séparant le bord (18) de la vitre (14) et la limite (22) du film étant alternativement variable de manière que des premières portions périphériques du film (20) soient en contact avec une bande d'adhésif (30) fixant la vitre (14) sur une paroi (10) de carrosserie du véhicule et des secondes portions périphériques du film (20) soient libres par rapport à la bande d'adhésif (30).

2. Véhicule selon la revendication précédente, **caractérisé en ce que** les premières et secondes portions périphériques du film (30) sont alternativement adjacentes.

3. Véhicule selon l'une quelconque des revendications précédentes, **caractérisé en ce que** la limite périphérique (22) du film est une ligne lisse.

4. Véhicule selon l'une quelconque des revendications précédentes, **caractérisé en ce que** la limite (22) du film (20) est ondulée.

5. Véhicule selon l'une quelconque des revendications précédentes, **caractérisé en ce que** la limite (22) du film (20) est ondulée selon des vagues dont des sommets correspondent aux portions de la limite les plus rapprochées du bord (18) de la vitre (14), dans les premières portions, et dont des creux correspondent aux portions de la limite les plus éloignées du bord de la vitre, dans les deuxièmes portions, le profil de chaque sommet étant plus aplati que le profil de chaque creux.

6. Véhicule selon l'une quelconque des revendications 1 à 4, **caractérisé en ce que** la distance séparant la limite (22) du film (20) et le bord (18) de la vitre (14) est alternativement variable selon une sinusoïde.

7. Véhicule selon l'une quelconque des revendications 1 à 2, **caractérisé en ce que** la limite (22) du film (20) est selon un profil en dents de scie ou selon un profil crénelé.

8. Véhicule selon l'un quelconque des revendications précédentes, **caractérisé en ce que** la plus grande largeur de recouvrement du film (20) par la bande d'adhésif (30) dans les premières portions est sensiblement de 1 millimètre.

9. Procédé de fabrication d'un véhicule selon l'une quelconque des revendications précédentes, **caractérisé en ce qu'**il comporte au moins une étape de découpe de film (20) et une étape de mise en adhérence du film sur la vitre (14) préalablement au montage de la vitre sur le véhicule, **en ce qu'**il comporte, dans une première phase de montage de la vitre sur le véhicule, une étape dans laquelle la bande d'adhésif (30) est encollée sur la vitre et **en ce qu'**il comporte, dans une deuxième phase de montage de la vitre sur le véhicule, une étape dans laquelle la vitre est plaquée contre la paroi (10), les premières portions périphériques du film (20) étant en contact avec la bande d'adhésif et les deuxièmes portions périphériques étant libres par rapport à la bande d'adhésif.

10. Procédé selon la revendication précédente, **caractérisé en ce que** dans pendant l'étape dans laquelle la bande d'adhésif (30) est encollée sur la vitre (14), la bande d'adhésif (30) est encollée sur les premières portions périphériques du film (20).

## Claims

1. Vehicle comprising a window (14) attached to a body panel (10), the window (14) being coated with a safety film (20) adhering to an inner face of the window, **characterized in that** a border (16B) at the periphery of the window (14) is free of film (20) so that a peripheral limit (22) of the film is located at a distance from the edge (18) of the window, the distance separating the edge (18) of the window (14) and the limit (22) of the film varying alternately so that first peripheral portions of the film (20) are in contact with a strip of adhesive (30) attaching the window (14) to a body panel (10) of the vehicle and second peripheral portions of the film (20) are free with respect to the strip of adhesive (30).

2. Vehicle according to the preceding claim, **characterized in that** the first and second peripheral portions of the film (30) are alternately adjacent.

3. Vehicle according to either of the preceding claims, **characterized in that** the peripheral limit (22) of the film is a smooth line.

4. Vehicle according to any one of the preceding claims, **characterized in that** the limit (22) of the film (20) is undulating.

5. Vehicle according to any one of the preceding claims, **characterized in that** the limit (22) of the film (20) is undulating in waves of which peaks correspond to the portions of the limit closest to the edge (18) of the window (14), in the first portions, and of which troughs correspond to the portions of the limit farthest from the edge of the window, in the second portions, the outline of each peak being flatter than the outline of each trough.

6. Vehicle according to any one of Claims 1 to 4, **characterized in that** the distance separating the limit (22) of the film (20) and the edge (18) of the window (14) varies alternately according to a sine wave.

7. Vehicle according to either of Claims 1 and 2, **characterized in that** the limit (22) of the film (20) follows a saw-tooth outline or a notched outline.

8. Vehicle according to any one of the preceding claims, **characterized in that** the greatest width of the film (20) covered by the strip of adhesive (30) in the first portions is generally 1 millimeter.

9. Production method for a vehicle according to any one of the preceding claims, **characterized in that** it comprises at least one film (20) cutting step and one step of making the film adhere to the window (14) prior to the fitting of the window to the vehicle, **in that** it comprises, in a first phase of fitting the window to the vehicle, a step in which the strip of adhesive (30) is bonded to the window and **in that** it comprises, in a second phase of fitting the window to the vehicle, a step in which the window is pressed against the panel (10), the first peripheral portions of the film (20) being in contact with the strip of adhesive and the second peripheral portions being free with respect to the strip of adhesive.

10. Method according to the preceding claim, **characterized in that** in during the step in which the strip of adhesive (30) is bonded to the window (14), the strip of adhesive (30) is bonded to the first peripheral portions of the film (20).

## Patentansprüche

1. Fahrzeug mit einem Fenster (14), das an einer Karosseriewand (10) befestigt ist, wobei das Fenster (14) mit einem Sicherheitsfilm (20) überzogen ist, der an einer Innenfläche des Fensters anhaftet, **dadurch gekennzeichnet, dass** eine Einfassung (16B) am Umfang des Fensters (14) keinen Film (20) aufweist, so dass sich eine Umfangsgrenze (22) des Films in einem Abstand von dem Rand (18) des Fensters befindet, wobei der den Rand (18) des Fensters (14) und die Grenze (22) des Films trennende Abstand abwechselnd variabel ist, so dass die ersten Umfangsteile des Films (20) mit einem Klebeband (30) in Kontakt stehen, das das Fenster (14) an einer Karosseriewand (10) des Fahrzeugs befestigt, und die zweiten Umfangsteile des Films (20) bezüglich des Klebebands (30) frei sind.

2. Fahrzeug nach dem vorhergehenden Anspruch, **dadurch gekennzeichnet, dass** die ersten und die zweiten Umfangsteile des Films (30) abwechselnd benachbart sind.

3. Fahrzeug nach einem der vorhergehenden Ansprüche, **dadurch gekennzeichnet, dass** die Umfangsgrenze (22) des Films eine glatte Linie ist.

4. Fahrzeug nach einem der vorhergehenden Ansprüche, **dadurch gekennzeichnet, dass** die Grenze (22) des Films (20) wellenförmig ist.

5. Fahrzeug nach einem der vorhergehenden Ansprüche, **dadurch gekennzeichnet, dass** die Grenze (22) des Films (20) in Wellen gewellt ist, deren Scheitel - in den ersten Teilen - Teilen der Grenze entspricht, die am nächsten zum Rand (18) des Fensters (14) liegen, und deren Täler - in den zweiten Teilen - den Teilen der Grenze entsprechen, die am weitesten von dem Rand des Fensters entfernt sind, wobei das Profil jedes Scheitels abgeflachter ist als das Profil jedes Tals.

6. Fahrzeug nach einem der Ansprüche 1 bis 4, **dadurch gekennzeichnet, dass** der die Grenze (22) des Films (20) und den Rand (18) des Fensters (14) trennende Abstand gemäß einer Sinuskurve abwechselnd variabel ist.

7. Fahrzeug nach einem der Ansprüche 1 bis 2, **dadurch gekennzeichnet, dass** die Grenze (22) des Films (20) gemäß einem Sägezahnprofil oder gemäß einem Zinnenprofil verläuft.

8. Fahrzeug nach einem der vorhergehenden Ansprüche, **dadurch gekennzeichnet, dass** die größte Breite des Films (20), die von dem Klebeband (30) bedeckt ist, in den ersten Teilen im Wesentlichen 1 Millimeter beträgt.

9. Verfahren zur Herstellung eines Fahrzeugs nach einem der vorhergehenden Ansprüche, **dadurch gekennzeichnet, dass** es mindestens einen Schritt des Abschneidens des Films (20) und einen Schritt des Festklebens des Films an dem Fenster (14) vor der Montage des Fensters an dem Fahrzeug umfasst, dass es in einer ersten Phase der Montage des Fensters an dem Fahrzeug einen Schritt umfasst, in dem das Klebeband (30) an das Fenster geklebt wird, dass es in einer zweiten Phase der Montage des Fensters an dem Fahrzeug einen Schritt umfasst, in dem das Fenster gegen die Wand (10) gedrückt wird, wobei die ersten Umfangsteile des Films (20) mit dem Klebeband in Kontakt stehen und die zweiten Umfangsteile bezüglich des Klebebands frei sind.

10. Verfahren nach dem vorhergehenden Anspruch, **dadurch gekennzeichnet, dass** während des Schritts, in dem das Klebeband (30) an das Fenster (14) geklebt wird, das Klebeband (30) auf die ersten Umfangsteile (20) des Films geklebt wird.
